(19) 

Europäisches
Patentamt
European
Patent Office
Office européen
des brevets

(11) **EP 3 989 135 A1**

(12) **EUROPEAN PATENT APPLICATION**

(43) Date of publication:
**27.04.2022 Bulletin 2022/17**

(21) Application number: **21190104.6**

(22) Date of filing: **06.08.2021**

(51) International Patent Classification (IPC):
**G06Q 10/04** *(2012.01)*    **G06Q 50/04** *(2012.01)*

(52) Cooperative Patent Classification (CPC):
**G06Q 10/04; G06N 7/005; G06Q 50/04**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.10.2020 US 202017074679**

(71) Applicant: **FUJITSU LIMITED**
**Kanagawa 211-8588 (JP)**

(72) Inventors:
- **Ghosh, Indradeep**
  **Sunnyvale, 94085 (US)**
- **Mandal, Avradip**
  **Sunnyvale, 94085 (US)**
- **Narayanan Hari, Surya**
  **Sunnyvale, 94085 (US)**
- **Ushijima-Mwesigwa,, Hayato**
  **Sunnyvale, 94085 (US)**

(74) Representative: **Hoffmann Eitle**
**Patent- und Rechtsanwälte PartmbB**
**Arabellastraße 30**
**81925 München (DE)**

(54) **PRODUCTION PLANNING USING OPTIMIZATION SOLVER MACHINES**

(57)    According to an aspect of an embodiment, operations may include receiving a first input associated with a set of orders to be produced at a production facility and receiving a second input associated with a set of production lines. The operations may further include extracting a set of production-related datapoints and receiving a third input associated with a set of constraints. The operations may further include generating a Quadratic Unconstrained Binary Optimization (QUBO) formulation based on the extracted set of datapoints and the third input and submitting the generated QUBO formulation to a first optimization solver machine. The operations may further include receiving a first solution of the submitted QUBO formulation from the first optimization solver machine and determining a schedule to be used for the production of the set of orders on the set of production lines, based on the received first solution.

200

FIG. 2

**Description**

FIELD

The embodiments discussed in the present disclosure are related to production planning using optimization solver machines.

BACKGROUND

Modern production or manufacturing facilities typically require production planning and scheduling in advance to deliver orders on time and manage production resources efficiently. Typically, a production facility includes one or more production lines which operate alone or in tandem to produce orders according to a production schedule. Most of such facilities are at some point in time affected by issues, such as a production line failure, order cancellation, unexpected surge in orders, a reduction in production capacity for a day or a specific period, or priority escalations.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

SUMMARY

According to an aspect of the disclosure, operations may include receiving a first input associated with a set of orders to be produced at a production facility and receiving a second input associated with a set of production lines of the production facility to be used for a production of the set of orders. The operations may further include extracting a set of production-related datapoints based on the received first input and the received second input Each of the extracted set of production-related datapoints may be required for a production planning of the set of orders. The operations may further include receiving a third input associated with a set of constraints associated with the production planning and generating a Quadratic Unconstrained Binary Optimization (QUBO) formulation based on the extracted set of production-related datapoints and the received third input. The operations may further include submitting the generated QUBO formulation to a first optimization solver machine and receiving a first solution of the submitted QUBO formulation from the first optimization solver machine. The operations may further include determining a schedule to be used for the production of the set of orders on the set of production lines based on the received first solution.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

BRIEF DESCRIPTION OF THE DRAWINGS

Example embodiments will be described and explained with additional specificity and detail through the use of the accompanying drawings in which:

FIG. 1 is a diagram representing an exemplary network environment for production planning using optimization solver machines,
FIG. 2 is a block diagram of a system for production planning using optimization solver machines,
FIG. 3 is a diagram that illustrates an example electronic user interface for providing input(s) for production planning using optimization solver machines,
FIG. 4 depicts a block diagram that illustrates a set of operations for production planning using optimization solver machines, and
FIG. 5 is a flowchart of an example method for production planning using optimization solver machines,
all according to at least one embodiment described in the present disclosure.

DESCRIPTION OF EMBODIMENTS

Embodiments of the present disclosure are explained with reference to the accompanying drawings.

Some embodiments described in the present disclosure relate to methods and systems for production planning using optimization solver machines. Production planning may be defined as determining a plan or a schedule for production of a set of orders at the production facility in an efficient manner. The plan or schedule must ensure that the orders are ready to transport on or before a delivery or fulfillment date. Also, the plan or schedule must be compliant with most of production-related constraints, with minimum violation of such constraints.

Usually, the production planning serves as a guide for the production of the orders within the production facility. Modern production or manufacturing facilities typically require production planning and scheduling in advance to deliver orders on time and manage production resources efficiently. The problem of production planning is a computationally expensive problem and has also been categorized as a non-deterministic polynomial-time (NP)-Hard problem.

Many software(s) and/or system(s) are present in the market that can automatically generate the production plan or schedule for the production facility. These software (s) and/or system(s) generally take a set of orders, a set of production slots (derived from production lines), and a set of constraints as input and provide the production plan as output The software or system may not always provide the most optimal production plan or schedule. In execution phase, unforeseen issues may arise that may disrupt the overall generated production plan. Some of such issues may include, for example, production line failure, order cancellations, an unexpected surge in the orders, a reduction in production capacity for a day or a period, a priority escalation (such as the customer may want order 1 week earlier or else will cancel the order), and the like. Conventionally, production plans have to revised whenever such issues occur to minimize any loss associated with further delay in production.

The disclosed system may formulate the production planning problem into a Quadratic Unconstrained Binary Optimization (QUBO) formulation. The disclosed system may further solve the generated QUBO formulation on an optimization solver machine. The optimization solver machine may include a special hardware that may solve hard combinatorial optimization problems (that also includes the production planning problem) quickly and efficiently as compared to traditional computing systems. While generating a production plan or schedule, many conventional production planning software don't consider logical constraints. For example, a logical constraint may require that the number of orders produced in production bucket (e.g., a day or a week) should lie within a production interval. In contrast, the disclosed system may encode the hard constraints as well as soft logical constraints in the QUBO formulation. Solving the QUBO formulation may result in a production plan or schedule which may be more optimized as compared to ones obtained through a conventional production planning software.

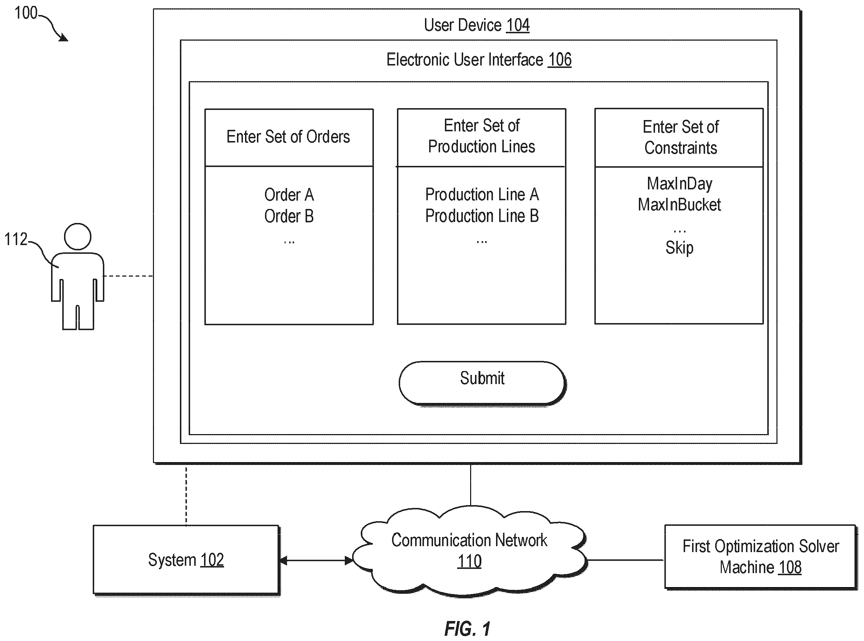

FIG. 1 is a diagram representing an exemplary network environment for production planning using optimization solver machines, arranged in accordance with at least one embodiment described in the present disclosure. With reference to FIG. 1, there is shown a network environment 100. The network environment 100 includes a system 102, a user device 104, an electronic User Interface (UI) 106 of the user device 104, and a first optimization solver machine 108. The system 102, the user device 104, and the first optimization solver machine 108 may be communicatively coupled to each other, via a communication network 110. There is further shown a user 112 who may be associated with the user device 104.

The system 102 may be a part of an on-premise or cloud computing environment associated with the user 112. The system 102 may include suitable logic, circuitry, and interfaces that may be configured to display a set of templates onto the electronic UI 106 of the user device 104. Each of such templates may include user-selectable options through which the user 112 may provide one or more input(s) to the system 102. Such inputs may be related to various parameters and constraints, which may be required to compose and solve an optimization problem on production planning.

In one or more embodiments, the system 102 may include the user device 104 as part of the on-premise computing environment The user device 104 may include a suitable network interface to communicate with the first optimization solver machine 108 that may be a part of an on-premise infrastructure or may be hosted on a cloud system. Examples of the user device 104 may include, but are not limited to, a mobile device, a desktop computer, a laptop, a computer workstation, or a server, such as a cloud server.

The electronic UI 106 may be displayed on the user device 104 to allow the user 112 to configure a constraint optimization problem, such as, a production planning problem. In an embodiment, the system 102 may receive one or more input(s) via the displayed set of templates. For example, the system 102 may receive a first input, a second input, and a third input via a first template, a second template, via a third template, respectively, of the displayed set of templates.

The first input may be associated with a set of orders to be produced at a production facility. In some embodiments, the first input may include one or more attributes associated with each of the set of orders, an order quantity, and a fulfilment schedule for the set of orders. For example, the first input may include an order type, a quantity of each type of product in the order, a fulfilment date, an earliest fulfilment date, and the like. For instance, if the production facility is a vehicle manufacturing plant, then the order type may specify a vehicle model and/or a paint color associated with a particular order of vehicles.

The second input may be associated with a set of production lines of the production facility to be used for the production of the set of orders. A production line may include a set of production slots, each of which may be used to produce a specific order. In some embodiments, the second input may further include first information associated with a set of production slots in each of the set of production lines and/or second information associated with a day-wise availability of each of the set of production lines.

The third input may be associated with a set of constraints that may be associated with the production planning for production of orders in the set of orders. Each of the set of constraints may be applicable on an objective associated with the problem of production planning. For example, the objective may require minimization of a total warning level (or cumulative penalty) associated with violation of the set of constraints. Each constraint may act over a time window. For each time window, a constraint may be determined to be violated or satisfied. Violation of constraints may signify different risk levels or penalties.

In an embodiment, the set of constraints may include hard constraints and soft constraints. The hard constraints must be enforced while solving the problem of production planning. For example, the hard constraints may enforce each production slot to be assigned at most one order, each order to be assigned to exactly one production slot in a production line, and each order to be assigned to a predesignated production line.

In an embodiment, the third input may include information associated with several soft constraints, such as a first constraint, a second constraint, a third constraint, a fourth constraint, a fifth constraint, or a sixth constraint. The first constraint (MaxInDay) may determine a first maximum number of orders producible in a day without incurring a first penalty. The second constraint (MaxInBucket) may determine a second maximum number of orders producible within a production bucket without incurring a second penalty. The production bucket may be a day, a week, a month or any other period. The third constraint (StartDate) may determine an earliest start date of the production without incurring a third penalty. The fourth constraint (EndDate) may determine a latest end date of the production without incurring a fourth penalty. The fifth constraint (NinM) may determine a maximum of a first number of orders (N) producible in a first number of sequential production slots (M) without incurring a fifth penalty. The sixth constraint (Skip) may determine a minimum number of unoccupied production slots between a pair of occupied production slots without incurring a sixth penalty.

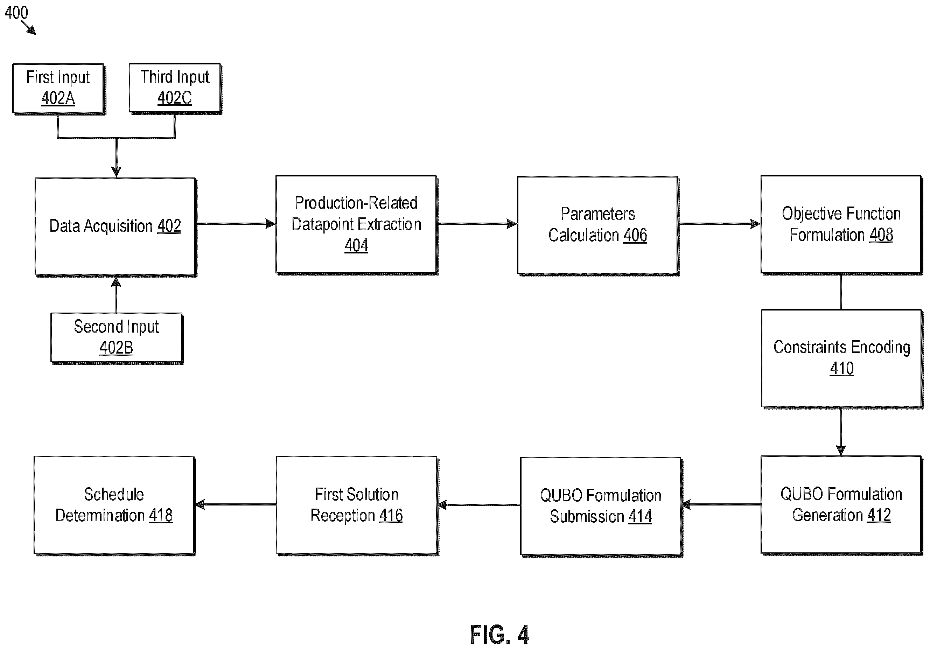

Based on the first input and the second input, the system 102 may extract a set of production-related datapoints. Each of the extracted set of production-related datapoints may be required for the production planning of the set of orders. By way of example, and not limitation, the extracted set of production-related datapoints may include a set of all days (D) for the production, a set of buckets (B, $B \in B$, $B \subset D$), a set of production lines (L), a set of orders (O), a set of orders ($O_B$) for each bucket (B), a set of slots (Z) for each day of the set of days, and a set of slot identifiers $(S, S \subset L \times D \times Z)$. Details about the set of production-related datapoints are described in FIG. 4, for example.

In an embodiment, the system 102 may calculate a first set of parameters that may be required for the production planning based on the received first input and the received second input. The first set of parameters may include a first parameter and a second parameter. The first parameter may represent a production interval ($I_k$) for each production bucket of the set of production buckets required for the production of the set of orders. The second parameter may represent a warning level (or a penalty) associated with the production interval.

The system 102 may generate a Quadratic Unconstrained Binary Optimization (QUBO) formulation based on the extracted set of production-related datapoints and the received third input. The QUBO formulation may be a compatible input format for the first optimization solver machine 108 and may include a square matrix (Q, a positive definite matrix) of constants. The value of the square matrix (Q) may depend on an objective associated with the production planning and the set of constraints on the objective. In some embodiments, the QUBO formulation may also consider penalty terms and slack variables. Such terms and variables may be considered before calculating the square matrix of the QUBO formulation. Details about generation of the QUBO formulation are provided, for example, in FIG. 4.

The generated QUBO formulation may be submitted via one or more application programming interface (API) calls to the first optimization solver machine 108. These API calls may be used to deliver a request from the system 102 to the first optimization solver machine 108 and then relay a response to the request back from the first optimization solver machine 108 to the system 102. The first optimization solver machine 108 may receive the QUBO formulation and may compute a first solution of the QUBO formulation by using optimization solving methods, such as quantum annealing or simulated annealing.

In one or more embodiments, the first optimization solver machine 108 may be implemented as a generalized quantum computing device on a cloud-based optimization system. The cloud-based optimization system may be implemented as one of a private cloud, a public cloud, or a hybrid cloud. In such an implementation, the generalized quantum computing device may use specialized optimization solving software applications (e.g., a QUBO solver) at an application layer to implement searching algorithms or meta-heuristic algorithms, such as simulated annealing or quantum annealing, to search for the first solution of the QUBO formulation from a discrete solution space of Boolean values (0 or 1).

The generalized quantum computing device may be different from a digital bit-based computing device, such as digital devices that are based on transistor-based digital circuits. The generalized quantum computing device may include one or more quantum gates that use quantum bits (hereinafter referred to as "qubits") to perform computations for different information processing applications, such as quantum annealing computations for solving the production planning problem. In general, a qubit can represent "0", "1", or a superposition of both "0" and "1". In most cases, the generalized quantum computing device may need a carefully controlled cryogenic environment to function properly. The generalized quantum computing device uses certain properties found in quantum mechanical systems, such as quantum fluctuations, quantum superposition of its Eigenstates, quantum tunneling, and quantum entanglement. These properties may help the generalized quantum computing device to perform computations for solving certain mathematical problems (e.g. QUBO) which are computationally intractable by conventional computing devices. Examples of the generalized quantum computing device may include, but are not limited to, a silicon-based nuclear spin quantum computer, a trapped ion quantum computer, a cavity quantum-electrodynamics (QED) computer, a quantum computer based on nuclear spins, a quantum computer based on electron spins in quantum dots, a superconducting quantum computer that uses superconducting loops and Josephson junctions, and nuclear magnetic resonance quantum computer.

In some other embodiments, the first optimization solver machine 108 may be a quantum annealing computer that may be specifically designed and hardware/software optimized to implement searching algorithms or meta-heuristic algorithms, such as simulated annealing or quantum annealing. Similar to the generalized quantum computing device, the quantum annealing computer may also use qubits and may require a carefully controlled cryogenic environment to function properly.

In some other embodiments, the first optimization solver machine 108 may correspond to a digital quantum-computing processor for solving production planning problems, which may be submitted in the form of the QUBO formulation or an Ising formulation (e.g., after a conversion from QUBO to Ising). More specifically, the first optimization solver machine 108 may be a digital annealer that may be based on a semiconductor-based architecture. The digital annealer may be designed to model the functionality of the quantum annealing computer on a digital circuitry. The digital annealer may operate at room temperature and may not require cryogenic environment to function. Also, the digital annealer may have a specific form factor that may allow it to fit on a circuit board that may be small enough to slide into the rack of a computing device or a computing infrastructure, such as a data center. In an embodiment, the digital annealer may include, for example, Ising Processing Units, to solve the Ising formulation. The Ising formulation may be obtained after conversion of the generated QUBO formulation. Method to perform such a conversion are well known in the art and therefore, details of such methods are omitted from the disclosure for the sake of brevity.

In some other embodiments, the first optimization solver machine 108 may include a processor to execute software instructions associated with one or more searching algorithms and/or meta-heuristic algorithms, such as simulated annealing or quantum annealing. Examples of the implementation of the processor may include, but are not limited to, a Reduced Instruction Set Computing (RISC) processor, an Application-Specific Integrated Circuit (ASIC) processor, a Complex Instruction Set Computing (CISC) processor, a Graphical Processing Unit (GPU), a Co-processor, and/or a combination thereof.

The first optimization solver machine 108 may transmit the computed first solution of submitted QUBO formulation to the system 102. The system 102 may receive the first solution from the first optimization solver machine 108. A schedule to be used for the production of the set of orders on the set of production lines may be determined based on the received first solution. In an embodiment, the system 102 may display the determined schedule on the user device 104. For example, the determined schedule may be displayed on the electronic UI 106 of the user device 104 or may be committed to a database on the user device 104.

It should be noted that the communication among the system 102, the user device 104, and the first optimization solver machine 108 may be performed via the communication network 110. The communication network 110 may include a communication medium through which the system 102 may communicate with the first optimization solver machine 108, and different servers (not shown). Examples of the communication network 110 may include, but are not limited to, the Internet, a cloud network, a Wireless Fidelity (Wi-Fi) network, a Personal Area Network (PAN), a Local Area Network (LAN), and/or a Metropolitan Area Network (MAN).

Various devices in the network environment 100 may be configured to connect to the communication network 110, in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), ZigBee, EDGE, IEEE 802.11, light fidelity(Li-Fi), 802.16, IEEE 802.11s, IEEE 802.11g, multi-hop communication, wireless access point (AP), device to device communication, cellular communication protocols, and/or Bluetooth (BT) communication protocols, or a combination thereof.

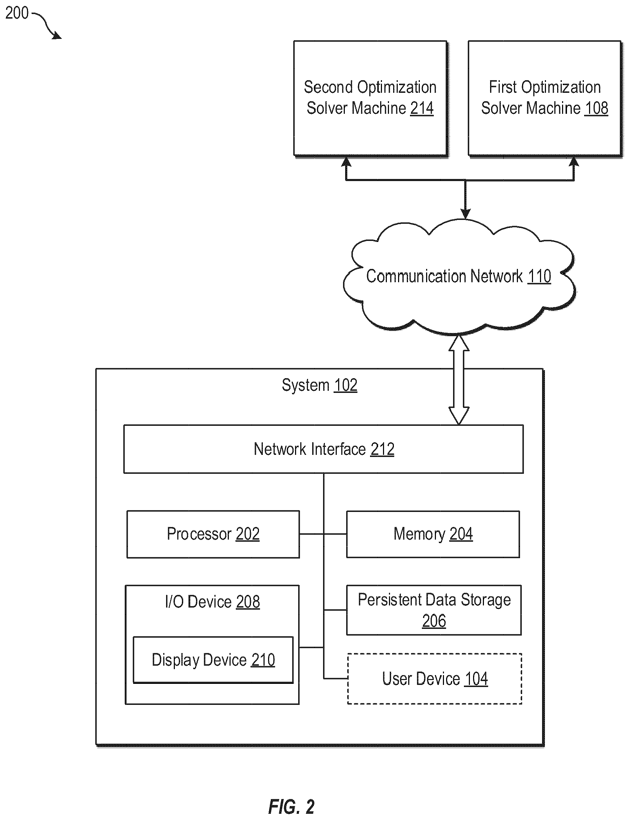

FIG. 2 is a block diagram of a system for production planning using optimization solver machines, according to at least one embodiment of the disclosure. FIG. 2 is explained in conjunction with elements from FIG. 1. With reference to FIG. 2, there is shown a block diagram 200 of the system 102. The system 102 may include a processor 202, a memory 204, and a persistent data storage 206. In some embodiments, the system 102 may also include an input/output (I/O) device 208 that may include a display device 210 and a network interface 212. The user device 104 may or may not be a part of the system 102. There is further shown the first optimization solver machine 108 and a second optimization solver machine 214 that may be communicatively coupled to the system 102.

The processor 202 may include suitable logic, circuitry, and/or interfaces that may be configured to execute program instructions associated with different operations to be executed by the system 102. The processor 202 may include any suitable special-purpose or general-purpose computer, computing entity, or processing device including various computer hardware or software modules and may be configured to execute instructions stored on any applicable computer-readable storage media. For example, the processor 202 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 2, the processor 202 may include any number of processors configured to, individually or collectively, perform or direct performance of any number of operations of the system 102, as described in the present disclosure.

In some embodiments, the processor 202 may be configured to interpret and/or execute program instructions and/or process data stored in the memory 204 and/or the persistent data storage 206. In some embodiments, the processor 202 may fetch program instructions from the persistent data storage 206 and load the program instructions in the memory 204. After the program instructions are loaded into memory 204, the processor 202 may execute the program instructions. Some of the examples of the processor 202 may be a GPU, a CPU, a RISC processor, an ASIC processor, a CISC processor, a co-processor, and/or a combination thereof.

The memory 204 may include suitable logic, circuitry, and/or interfaces that may be configured to store program instructions executable by the processor 202. In certain embodiments, the memory 204 may be configured to store inputs from the user 112 and information associated with any intermediate or final solution to the problem of production planning. The memory 204 may include computer-readable storage media for carrying or having computer-executable instructions or data structures stored thereon. Such computer-readable storage media may include any available media that may be accessed by a general-purpose or special-purpose computer, such as the processor 202.

By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The persistent data storage 206 may include suitable logic, circuitry, and/or interfaces that may be configured to store program instructions executable by the processor 202, operating systems, and/or application-specific information, such as logs and application-specific databases. The persistent data storage 206 may include computer-readable storage media for carrying or having computer-executable instructions or data structures stored thereon. Such computer-readable storage media may include any available media that may be accessed by a general-purpose or special-purpose computer, such as the processor 202.

By way of example, and not limitation, such computer-readable storage media may include tangible or non-transitory computer-readable storage media including Compact Disc Read-Only Memory (CD-ROM) or other optical disk storage, magnetic disk storage or other magnetic storage devices (e.g., Hard-Disk Drive (HDD)), flash memory devices (e.g., Solid State Drive (SSD), Secure Digital (SD) card, other solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 202 to perform a certain operation or group of operations associated with the system 102.

The I/O device 208 may include suitable logic, circuitry, interfaces, and/or code that may be configured to receive inputs from the user 112. The I/O device 208 may be further configured to display the determined schedule and a total warning level on the display device 210. The I/O device 208 may include various input and output devices, which may be configured to communicate with the processor 202 and other components, such as the network interface 212. Examples of the input devices may include, but are not limited to, a touch screen, a keyboard, a mouse, a joystick, and/or a microphone. Examples of the output devices may include, but are not limited to, a display (such as the display device 210) and a speaker.

The display device 210 may include suitable logic, circuitry, interfaces, and/or code that may be configured to render the electronic UI 106 onto a display screen of the display device 210. In one or more embodiments, multiple user inputs from a user (such as the user 112) may be received, via the display device 210. The display device 210 may be realized through several known technologies such as, but not limited to, a Liquid Crystal Display (LCD) display, a Light Emitting Diode (LED) display, a plasma display, and/or an Organic LED (OLED) display technology, and/or other display technologies. Additionally, in some embodiments, the display device 210 may refer to a display screen of smart-glass device, a 3D display, a see-through display, a projection-based display, an electro-chromic display, and/or a transparent display.

The second optimization solver machine 214 machine may include the set of Ising processing units that may be configured to solve an Ising formulation(s). In one or more embodiments, each Ising processing unit may be a software module or hardware-based device (such as a digital annealer) that may be configured to run on the second optimization solver machine 214. Each Ising processing unit may correspond to a mathematical abstraction of an Ising model for solving the Ising formulation. The Ising model may be a mathematical model concerned with the physics of phase transitions, which occur when a small change in a parameter causes a large-scale, qualitative change in the state of a system. The properties of a magnetic material may be determined by magnetic spins, which can be oriented up (+1) or down (-1). The Ising model may be expressed in terms of the individual spin states (+1/-1), the interaction coefficients that represent the strength of the intersections between different pairs of spin states, and the external magnetic coefficients that represent the strength of the external magnetic field. Therefore, a solution of the Ising formulation may be analogous to spin states for a minimum energy configuration of the Ising model.

The set of Ising Processing Units may be configured to solve the Ising formulation by searching for values of binary decision variables (+1/-1) of the Ising formulation from a discrete solution space such that the energy (analogous to energy of the Ising Model) of the Ising formulation is a minimum.

The network interface 212 may include suitable logic, circuitry, interfaces, and/or code that may be configured to establish a communication between the system 102, the user device 104, the first optimization solver machine 108, and the second optimization solver machine 214, via the communication network 110. The network interface 212 may be implemented by use of various known technologies to support wired or wireless communication of the system 102 via the communication network 110. The network interface 212 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, and/or a local buffer.

The network interface 212 may communicate via wireless communication with networks, such as the Internet, an Intranet, and/or a wireless network, such as a cellular telephone network, a wireless local area network (LAN) and/or a metropolitan area network (MAN). The wireless communication may use any of a plurality of communication standards, protocols and technologies, such as Global System for Mobile Communications (GSM), Enhanced Data GSM Environment (EDGE), wideband code division multiple access (W-CDMA), Long Term Evolution (LTE), code division multiple access (CDMA), time division multiple access (TDMA), Bluetooth, Wireless Fidelity (Wi-Fi) (such as IEEE 802.11a, IEEE 802.11b, IEEE 802.11g and/or IEEE 802.11n), voice over Internet Protocol (VoIP), light fidelity (Li-Fi), or Wi-MAX.

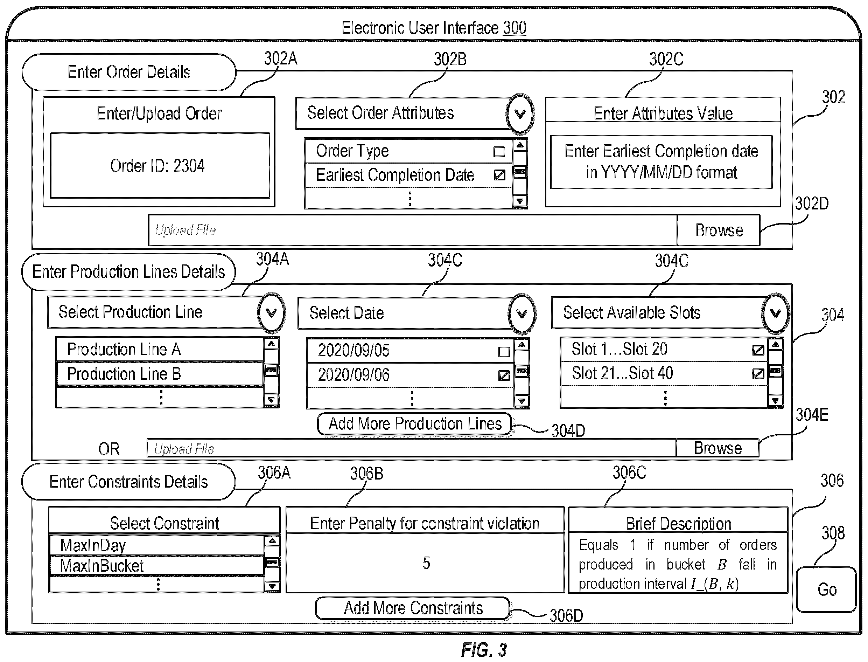

The functions or operations executed by the system 102, as described in FIG. 1, may be performed by the processor 202. Operations executed by the processor 202 are described in detail, for example, in FIG. 3, FIG. 4, and FIG. 5.

Modifications, additions, or omissions may be made to the system 102 without departing from the scope of the present disclosure. For example, in some embodiments, the system 102 may include any number of other components that may not be explicitly illustrated or described.

FIG. 3 is a diagram that illustrates an example electronic user interface (UI) for providing input(s) for production planning using optimization solver machines, according to at least one embodiment described in the present disclosure. FIG. 3 is explained in conjunction with elements from FIG. 1 and FIG. 2. With reference to FIG. 3, there is shown an electronic UI 300, which may be an example implementation of the electronic UI 106 of FIG. 1. The electronic UI 300 may be displayed on the user device 104 based on a user request, which may be received via an application interface displayed onto a display screen of the user device 104. The application interface may be part of an application software, for example, a software development kit (SDK), a cloud server-based application, a web-based application, an OS-based application/application suite, an enterprise application, a mobile application for API mashup generation.

On the electronic UI 300, there is shown a set of UI elements, such as a first UI element 302, a second UI element 304, a third UI element 306, and a fourth UI element 308. In FIG. 3, the first UI element 302 is labelled as, for example, "Enter Order Details". The first UI element 302 may include an order textbox 302A, an order attributes menu 302B, an attribute value textbox 302C, and/or a browse button 302D. Through the order textbox 302A, the order attributes menu 302B, the attribute value textbox 302C, or the browse button 302D, the system 102 may receive a first input associated with the set of orders to be produced at the production facility.

The order textbox 302A may be a textbox where the user 112 may add information about the set of orders in a defined format The set of orders may have to be produced at the production facility at a future time. The order information in the order textbox 302A may include, for example, an order identifier and order description.

The order attributes menu 302B may be a drop-down menu that may display multiple attribute options, each of which may be associated with one of the set of orders, an order quantity, and a fulfilment schedule for the set of orders. The order attributes menu 302B may allow the user 112 to select one or more attributes options, for example, via checkboxes. In one or more embodiments, the drop-down list of the order attributes menu 302B may be populated with attributes associated with each of the set of orders, the order quantity, and the fulfilment schedule for the set of orders.

By way of example, and not limitation, if the set of orders is of vehicles to be produced, then the attributes associated with the set of orders may include a duty classification, a vehicle type, an engine type, a vehicle colour, and the like. The order quantity may include the number of vehicles to be produced. In some cases, multiple order quantities may be specified according to different attributes. For example, in case of a color attribute, different quantities, such as five blue vehicles and 10 black vehicles may be specified for both blue and black colors. Similarly, the fulfilment schedule may include a delivery date, a completion date, an earliest completion date, and the like.

The attribute value textbox 302C may be a textbox where the user 112 may provide values for each selected attribute option in a particular format For example, if fulfillment date is selected via the order attributes menu 302B, then the user 112 may enter fulfillment dates via the attribute value textbox 302C.

In one or more embodiments, instead of providing the order information via the order textbox 302A, selecting the attribute options via the order attributes menu 302B, and providing the values for selected options via the attribute value textbox 302C, all the information associated with the set of orders and associated attributes (along with their respective values) may be combined within a single file or multiple files. Such file(s) may be uploaded to the system 102, via the browse button 302D of the electronic UI 300. Such file(s) may be in a particular format, such as a spreadsheet, a comma separated values (CSV) file, a JavaScript Object Notation (JSON), Extensible Markup Language (XML), or any other suitable format

The system 102 may be configured to retrieve the information about the set of order and associated attributes along with their attribute values from the uploaded file(s). Example of the retrieved information for vehicle production is presented in Table 1, as follows:

Table 1: Set of Orders with Attributes

| ID | Duty Classification | Vehicle Type | Quantity | Engine Type | Color | Has Stereo? | Earliest Completion date | Deliver by |
|----|---------------------|--------------|----------|-------------|-------|-------------|--------------------------|------------|
| 1. | Light | Coupe | 31 | Petrol | Red | Yes | 2021/01/01 | 2021/02/01 |
| 2. | Light | Sedan | 44 | Diesel | White | Yes | 2021/01/01 | 2021/02/01 |
| 3. | Light | Sedan | 12 | Petrol | Blue | Yes | 2021/01/01 | 2021/02/01 |
| 4. | Medium | Truck | 13 | Diesel | Black | Yes | 2021/02/15 | 2021/04/15 |
| 5. | Medium | Truck | 8 | Diesel | Blue | No | 2021/05/20 | 2021/07/20 |
| 6. | Heavy | Semi-Trailer | 6 | Diesel | Black | No | 2021/12/01 | 2022/03/01 |
| 7. | Heavy | Trailer | 5 | Diesel | Black | Yes | 2022/04/01 | 2022/07/01 |

Data in Table 1 is merely provided as an example and should not be construed as limiting for the disclosure. The second UI element 304 may be labelled as, for example, "Enter Production Lines Details" and may include a production line menu 304A, a slot menu 304B, a date menu 304C, and/or add more production line(s) button 304D, and/or a browse button 304E. Through the production line menu 304A, the slot menu 304B, the date menu 304C, and/or the add more production line(s) button 304D and/or a browse button 304E, the user 112 may provide a second input to the system 102. The system 102 may receive the second input associated with the set of production lines of the production facility to be used for the production of the set of orders.

The production line menu 304A may be a drop-down menu, which may list a set of production lines that may be available in the production facility. Through the production line menu 304A, a number of production lines may be selected for production of the set of orders. Each production line may include a set of production slots. Each of such slots may be assigned at most one order during the production planning. For example, if the production facility has six production lines, then all the six production lines may be displayed into the drop-down menu.

The slot menu 304B may be a drop-down menu that may display multiple production slots for each selection of a production line. Through the slot menu 304B, the system 102 may receive first information associated with a set of production slots in each of the set of production lines. The slot menu 304B may allow the user 112 to select production slots, for example, via checkboxes. For each production line, the selected production slots may be available for production of the set of orders.

The date menu 304C may be a drop-down menu that may display multiple dates. The date menu 304C may allow the user 112 to select one or more dates, for example, via checkboxes. The selected one or more dates may specify the day-wise availability of each of the set of production lines for production of the set of orders. In one or more embodiments, the selection of one or more dates via the date menu 304C may be referred as second information associated with a day-wise availability of each of the set of production lines.

In some scenarios, the user 112 may be provided with options to add another production line by clicking on the add more production line(s) button 304D. Upon selection of the add more production line(s) button 304D, the system 102 may display a new UI element, which may be similar to the second UI element 304. The user 112 may be again provided with options to add more production lines, select dates to indicate day-wise availability of such production lines, and indicate slots available in the added production lines.

In one or more embodiments, instead of selection of the production line via the production line menu 304A, selection of slots via the slot menu 304B, selection of the one or more dates via the date menu 304C, and/or addition of more production line(s) via the add more production line(s) button 304D, all the information about the production lines and associated dates and slots may be combined within a single file and may be uploaded on the electronic UI 300 via the browse button 304E. The file may be in a defined format, such as spreadsheet or a CSV file. The system 102 may be configured to retrieve the second input, i.e. the information about the set of order and associated attributes along with their attribute values from the uploaded file. Example of such information is presented in Table 2, as follows:

Table 2: Set of Production lines with dates and slots

| Production line | Date | Slot Availability |
|---|---|---|
| Production line A Production line B | 2020/09/05 | Slot 1...Slot 40 |
| Production line B | 2020/09/06 | Slot 21...Slot 40 |
| Production line A | 2020/09/07 | Slot 1...Slot 20 |
| Production line A Production line B | 2020/09/08 | Slot 1...Slot 40 |
| ... | ... | ... |

Data in Table 2 is merely provided as an example and should not be construed as limiting for the disclosure. The third UI element 306 may be labelled as, for example, "Enter Constraint Details". The third UI element 306 may include a constraint selection menu 306A, a penalty selection textbox 306B, and a description label 306C. Through the constraint selection menu 306A, the penalty selection textbox 306B, and the description label 306C, the system 102 may receive a third input associated with a set of constraints associated with the production planning.

The constraint selection menu 306A may be a menu from where the user 112 may specify or select a set of constraints for the production planning. In some cases, the user 112 may write a name of the constraint and the system 102 may determine the constraint associated with the name. The penalty selection textbox 306B may be a textbox through which the user 112 may specify a penalty applicable when a constraint (selected via the constraint selection menu 306A) is violated.

The description label 306C may be a textbox through which the user 112 may view a brief description of the constraint (selected via the constraint selection menu 306A) for the production planning. In some cases, the user 112 may input a multiple penalty values, each of which may be applicable if a parameter/variable of the constraint takes on a specific value within a range. Details associated with the set of constraints are provided in FIG. 1 and FIG. 4, for example. The user 112 may be provided with options to add another constraint by clicking on the add more constraint(s) button 306D. Upon selection of the add more constraint(s) button 306D, the system 102 may display a UI element, which may be similar to the third UI element 306. The user 112 may be again provided with options to select another constraint, specify a penalty for constraint violation, and view a brief description of the selected constraint

The fourth UI element 308 may be labelled as, for example, "Submit" and may be a button. Upon a selection of the button, the system 102 may formulate a QUBO formulation and may submit the QUBO formulation to the first optimization solver machine 108 (or the second optimization solver machine 214). The solution of the submitted formulation may be used to output a schedule to be used for the production of the set of orders on the set of production lines.

It should be noted that the UI/UI elements in the electronic UI 300 are merely provided as an example and should not be construed as limiting for the present disclosure. In some embodiments, the electronic UI 300 may be suitably modified to allow the user 112 to enter or upload information associated with the first input, the second input, and the third input.

FIG. 4 depicts a block diagram that illustrates a set of operations for production planning using optimization solver machines, in accordance with example embodiments. FIG. 4 is explained in conjunction with elements from FIG. 1, FIG. 2, and FIG. 3. With reference to FIG. 4, there is shown a block diagram 400 of a set of exemplary operations from 402 to 418. The exemplary operations illustrated in the block diagram 400 may be performed by any computing system, such as by the system 102 of FIG. 1 or by the processor 202 of FIG. 2.

At 402, data acquisition may be performed. For such acquisition, the system 102 may receive a first input 402A, a second input 402B, and a third input 402C via the user device 104. Such inputs may be manually entered by the user 112 or may be extracted from file(s) uploaded on the system 102, via the user device 104.

The first input 402A may be associated with the set of orders to be produced at the production facility and may be received, for example, via the first UI element 302 of FIG. 3. Examples of the production facility may include, but are not limited to, a manufacturing plant, an assembly plant, a production factory, a fabrication unit (such as a chip fab), or a product sorting unit The first input 402A may include one or more of attributes that may be associated with each of the set of orders, an order quantity, and a fulfilment schedule for the set of orders.

The second input 402B may be associated with a set of production lines of the production facility to be used for the production of the set of orders and may be received, for example, via the second UI element 304 of FIG. 3. The second input may include first information associated with a set of production slots in each of the set of production lines and second information associated with a day-wise availability of each of the set of production lines.

The third input 402C may be associated with a set of constraints associated with the production planning and may be received, for example, via the third UI element 306 of FIG. 3. The set of constraints may include hard constraints and soft constraints. The hard constraints must be enforced while solving the problem of production planning. For example, such hard constraints may include a constraint that ensures each slot is assigned at most one order, a constraint that ensures each order is assigned to exactly one production slot, and a constraint that ensures each order is assigned to a single production line.

In an embodiment, the soft constraints may include a first constraint, a second constraint, a third constraint, a fourth constraint, a fifth constraint, or a sixth constraint. The first constraint (MaxInDay) may determine a first maximum number of orders producible in a day without incurring a first penalty. The second constraint (MaxInBucket) may determine a second maximum number of orders producible within a production bucket without incurring a second penalty. The production bucket may be a day, a week, a month or any other period. The third constraint (StartDate) may determine an earliest start date of the production without incurring a third penalty. The fourth constraint (EndDate) may determine a latest end date of the production without incurring a fourth penalty. The fifth constraint (NinM) may determine a maximum of a first number of orders (N) producible in a first number of sequential production slots (M) of a production line, without incurring a fifth penalty. The sixth constraint (Skip) may determine a minimum number of unoccupied production slots in a production line between a pair of occupied production slots, without incurring a sixth penalty.

The soft constraints may be violated by incurring penalties associated with such constraints. For example, the first constraint may be violated by incurring the first penalty, the second constraint may be violated by incurring the second penalty, the third constraint may be violated by incurring the third penalty, the fourth constraint may be violated by incurring the fourth penalty, the fifth constraint may be violated by incurring the fifth penalty, and the sixth constraint may be violated by incurring the sixth penalty. The penalty which may be applicable on violation of any of such constraints may be specified in the third input (for example, received via the third UI element 306 of FIG. 3).

Examples of the set of constraints associated with a vehicle production problem for a given set of orders (as mentioned in Table 1) are provided herein. The first constraint may be defined as "If more than 90 vehicles are produced in a day, then the first penalty of 54 may be incurred". The second constraint may be defined as "If more than 50 vehicles are produced in a production bucket, then the second penalty of 78 may be incurred". The third constraint may be defined as "If the production of the order is not started by Feb-23-2020, then the third penalty of 10 may be incurred". The fourth constraint may be defined as "If the set of orders are not completed by Nov-23-2020 (the latest end date), then the fourth penalty of 99 per order may be incurred". The fifth constraint or N-in-M may be defined as "If more than 5 (N) vehicles per 10 (M) sequential slots are painted, then the fifth penalty of 18 may be incurred". Similarly, the sixth constraint or the skip constraint may be defined as "If 10 slots are not left empty per order, then the sixth penalty of 99 may be incurred".

At 404, a set of production-related datapoints may be extracted. In an embodiment, the system 102 may extract the set of production-related datapoints based on the received first input 402A and the received second input 402B. Each of the extracted set of production-related datapoints may be required for the production planning of the set of orders. An example of production-related datapoints is provided in Table 3, as follows:

Table 3: Production-related Datapoints

| Production-Related Datapoints | |
|---|---|
| Notation | Description |
| D | Set of all days |
| $\mathcal{B}$ | Set of buckets, where each Bucket $B \in B$, $B \subset D$ |
| L | Set of production Lines, where each production line $l \in L$ |
| O | Set of orders, where each order $o \in O$ |

(continued)

| Production-Related Datapoints | |
|---|---|
| Notation | Description |
| $O_B$ | For every $B \in B$, $O_B \subset O$ |
| Z | Set of slots for each day, $z \in Z$ |
| $\mathcal{S}$ | Set of slot ids $\mathcal{S} \subset L \times D \times Z$ |

As shown in Table 3, the set of production-related datapoints include a set of all days (D) available for production, a set of production buckets (B), a set of production lines (L), a set of orders (O), a set of orders for every bucket ($O_B$), a set of slots (Z) available on each day for production, and a set of slot identifiers (S). Each bucket ($B \in B$) may be defined by a time period, such as a day, a week, a month, or any other specified period. Each bucket (B) belonging to the set of production buckets (B), may be a subset of the set of all days (D) (i.e. $B \in B$ and $B \subset D$). The set of orders ($O_B$) for every production bucket may be a subset of the set of orders (O). Similarly, the set of slot identifiers ($\delta$, $\delta \subset L \times D \times Z$) may include all slots which may be available on the set of all days (D) (given a set of slots (Z) available each day on the set of production lines (L)). Data in Table 3 is merely provided as an example and should not be construed as limiting for the disclosure.

At 406, parameter calculation may be performed. In an embodiment, the system 102 may calculate a first set of parameters based on the received first input 402A and the received second input 402B. Each of the calculated first set of parameters may be required for generation of a Quadratic Unconstrained Binary Optimization (QUBO) formulation and may include a first parameter and a second parameter, for example.

The first parameter may represent a production interval ($I_{B,K}$) for each production bucket (B) of the set of production buckets ($\mathcal{B}$) required for the production of the set of orders (O). By way of example, and not limitation, the production interval ($I_{B,K}$) for a bucket (B) is provided by equation (1), as follows:

$$I_{B,K} = [u_k, v_k] \qquad\qquad (1)$$

where $u_k$, $v_k$, $k \in N$ for each bucket

$$B \in \mathcal{B}$$

$u_k$ may represent a start date or a start slot identifier of the interval 'k',
$v_k$ may represent an end date or an end slot identifier of the interval 'k', and N may represent a set of natural numbers.

The second parameter may represent a warning level ($W_{B,K}$) associated with the production interval. The warning level ($W_{B,K}$) may correspond to a penalty that may be incurred when at least one constraint of the set of constraints is violated in the production interval ($I_{B,K}$). To obtain an optimal schedule of production, a total warning level ($W_{B,K}$) or a total penalty across all production intervals should be minimized.

At 408, an objective function may be formulated. In an embodiment, the system 102 may formulate the objective function, which may have to be solved to find a schedule of production of the set of orders (O). The objective function may model the problem of the production planning as a constraint optimization problem. For instance, the objective function may be a cost function which may have to be minimized with respect to variables (such as $x_{o,l,d,z}$) in the presence of a set of constraints on such variables. For example, the variable ($x_{o,l,d,z}$ for a given $o \in O$, $l \in L$, $d \in D$, and $z \in Z$) may determine a schedule which uniquely assigns each order (o) to a production slot (z) of a production line (1) on a specific day (d).

The objective function may be formulated based on the extracted set of production-related datapoints (at 404) and the calculated first set of parameters (406). The formulated objective function may define an objective to minimize a total warning level (i.e. a cumulative penalty) associated with a violation of at least one of the set of constraints (specified in the third input 402 C).

For example, the objective function may include a first objective associated with the second constraint (i.e. MaxInBucket) of the set of constraints. The objective associated with the second constraint may be provided by equation

(2), as follows:

$$\text{Min} \sum_{B \, \in \, B} \rho_l \, (B) \qquad\qquad (2)$$

where,

$\rho_l$ (B) may represent a total warning level for a production bucket B and a production line l and may be provided by equation (3), as follows:

$$\rho_l(B) = (n(B) \in I_{B,k}) \cdot n(B) \cdot w_{B,k} \qquad\qquad (3)$$

where,

$(n(B) \in I_{B,k})$ may equal to 1 if the number of orders produced in a production bucket B fall in a production interval $I_{B,k}$, and
n(B) may represent the number of production buckets.

At 410, a constraint encoding operation may be performed. Such an operation may be a part of transforming constraints associated with the objective function into a QUBO format. In an embodiment, the system 102 may encode each of (or at least one of) the set of constraints (specified in the third input 402C) into a QUBO formulation. Examples representation of some of such constraints are provided by equations (4), (5), (6), and (7), as follows:

$$x_{o,s} = x_{o,l,d,z} = 1 \qquad\qquad (4)$$

Equation (4) may represent a condition on a binary variable ($x_{o,s} \in \{0,1\}$) of the objective function. The condition states that $x_{o,l,d,z} = 1$ if and only if an order o assigned to a slot id $s=(l,d,z)$.

$$\sum_{l \in L} \sum_{o \in O} \sum_{z \in Z} x_{o,l,d,z} \qquad\qquad (5)$$

Equation (5) may represent a linear constraint on the objective function and may represent a number of orders in day (d) across all production lines (L).

$$n(B) = \sum_{d \in B} \sum_{l \in L} \sum_{o \in O_B} \sum_{z \in Z} x_{o,l,d,z} \qquad\qquad (6)$$

Equation (6) may also represent a linear constraint on the objective function and may represent a number of orders in a production bucket B $\in$ B across all production lines (L).

$$1(n(B) \in I_{B,k}) \qquad\qquad (7)$$

Equation (7) may be a logical constraint which may equal 1 if number of orders produced in a production bucket B fall in a production interval $I_{B,k}$

To encode the set of constraints, the system 102 may identify one or more logical constraints from the set of constraints (specified in the received third input 402C). A logical constraint may combine linear constraints by means of logical operators, such as logical-and, logical-or negation (that is, not), conditional statements (that is, if ... then ...) to express complex relations between linear constraints.

Some examples of the logical constraints may include the second constraint (i.e. MaxInBucket, as represented by equation (7)), third and fourth constraints (which are date constraints, such as "Does Start Date fall in day interval k?"), the fifth constraint (NinM: "Does number of sequential orders fall into slot interval k?"), or the sixth constraint (Skip: "Does the number of unoccupied slots between an order and the next order fall into interval k?"). While logical constraints are typically not used in formulating a QUBO, the system 102 may transform the logical constraints into a QUBO format so that the solution of the QUBO considers any violation of the logical constraints.

From equation (7), the MaxInBucket constraint may equals 1 if the number of orders produced in a production bucket (B) lies within the production interval ($I_{B,K}$). The notation of the MaxInBucket constraint may be represented by equation (8), as follows:

$$y_{B,i} = 1 \Leftrightarrow \left( n(B) \in I_{B,i} \right) = 1 \qquad (8)$$

where

n(B) may represent the number of buckets in the set of buckets (B), and $I_{B,i}$ may represent the production interval 'i' for the bucket B.

The system 102 may transform the equation represented by equation (8) by determining endpoints of the production intervals. If $L_{B,1} < L_{B,2} < \cdots < L_{B,n+1}$ are possible end points of the production intervals that $n_i(B)$ can take, then the equation $L_{B,i} \leq y_{B,i} < L_{B,i+1} \Leftrightarrow y_{B,i} = 1$ may be modelled and represented as equation (9), equation (10), and equation (11) as follows:

$$-M_i \left( 1 - y_{B,i} \right) \leq n(B) - L_i = 1 \qquad (9)$$

$$-M_i' \left( 1 - y_{B,i} \right) < L_{i+1} - n(B) = 1 \qquad (10)$$

$$\sum_i y_{B,i} = 1 \qquad (11)$$

Where,

$M_i$ and $M_i'$ are large constant values.

It should be noted that for large values of $M_i$ and $M_i'$, the equations represented by equation (9), equation (10), and equation (11) may give us a linear formulation of the MaxInBucket constraint. The linear formulation of the MaxInBucket constraint (represented by equation (9), equation (10), and equation (11)) may be further transformed into a QUBO format The QUBO format may be represented as equation (12), equation (13), and equation (14) as follows:

$$\left( -M_i \left( 1 - y_{B,i} \right) - n(B) - L_{B,i} + slack_B(i) \right)^2 = 1 \qquad (12)$$

$$\left( -M_i' \left( 1 - y_{B,i} \right) - L_{B,i+1} - n(B) + slack_B(i) \right)^2 \qquad (13)$$

$$\left( \sum_i y_{B,i} - 1 \right)^2 \qquad (14)$$

where,

slack(i) may be a linear function for slack variables for constraint I, and slack(i) = $2^0 u_1 + 2^1 u_2 + \cdots + 2^m u_m$ for some $m \in N$, $u_i \in \{0,1\}$

At 412, a QUBO formulation may be generated. In an embodiment, the system 102 may be configured to generate the QUBO formulation of the production planning. The QUBO formulation may be generated based on the formulated objective function (at 408) and the encoded set of constraints (at 410). In some embodiments, the QUBO formulation may be generated further based on the first set of parameters (calculated at 406).

The QUBO formulation may be a compatible input format for the first optimization solver machine 108 and may include a cost matrix (Q) of constants associated with a vector (x) of binary decision variables. In an embodiment, the vector (x) may be same as the binary variable $(x_{o,l,d,z})$ of equation (4). A generalized QUBO form for any problem is given by equation (15), as follows:

$$\min\ (y = x^T \cdot Q \cdot x) \qquad (15)$$

where,

x may represent the vector of binary decision variables,
and Q may be the cost matrix of constants.

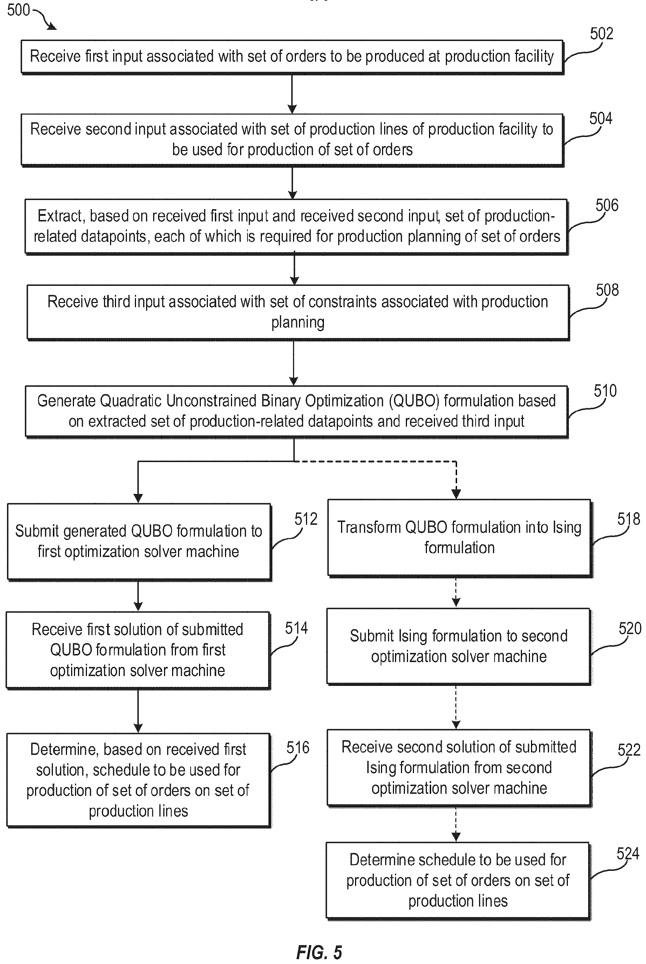

At 414, the QUBO formulation may be submitted. In an embodiment, the system 102 may submit the generated QUBO formulation to the first optimization solver machine 108 via an application programming interface (API) call. In one or more embodiments, the system 102 may transform the QUBO formulation into an Ising formulation and may submit the Ising formulation to the second optimization solver machine 214. Details associated with the Ising formulation and an associated solution are provided in FIG. 5, for example.

The first optimization solver machine 108 may solve the QUBO formulation by application of searching methods and/or meta-heuristic methods, such as quantum annealing, to obtain a first solution of the submitted QUBO formulation. Specifically, to search for the solution (i.e. values of the vector of binary decision variables (x)), the energy of the QUBO formulation may be minimized. The solution may be optimal (or near optimal) and may be searched from a discrete solution space.

At 416, the first solution to the submitted QUBO formulation may be received. In an embodiment, the system 102 may receive the first solution of the submitted QUBO formulation from the first optimization solver machine 108. The received first solution may include binary values for the vector of binary decision variables (x).

At 418, a schedule determination operation may be performed. In the schedule determination operation, the system 102 may determine a schedule to be used for the production of the set of orders (O) on the set of production lines (L). The schedule may be determined based on the received first solution. For example, if vector (x) of binary decision variables is same as the binary variable $(x_{o,l,d,z})$ of equation (4), then the first solution may include the value of the variable $(x_{o,l,d,z})$. The variable $(x_{o,l,d,z}$ for a given $o \in O$, $l \in L$, $d \in D$, and $z \in Z)$ may determine a schedule which uniquely assigns each order (o) to a production slot (z) of a production line (1) on a specific day (d). For example, the schedule may allocate each order to a production slot of a production line such the order is completed on or before a set delivery date (or completion date or earliest completion date).

In some embodiments, the system 102 may compute a total warning level based on the determined schedule. The computed total warning level may indicate a total penalty incurred as a result of violation of at least one of the set of constraints in the determined schedule. The system 102 may display the determined schedule and the computed total warning level on the electronic UI 106 of the user device 104. As an example, the total warning level associated with the MaxInBucket constraint may be computed using equation (16), as follows:

$$\sum_{l\in L}\sum_{B\in\beta}\rho_l(B) \qquad (16)$$

where $\rho_l(B)$ may be computed using equation (3).

FIG. 5 is a flowchart of an example method for production planning using optimization solver machines, arranged in accordance with at least one embodiment described in the present disclosure. FIG. 5 is explained in conjunction with elements from FIG. 1, FIG. 2, FIG. 3, and FIG. 4. With reference to FIG. 5, there is shown a flowchart 500. The example method illustrated in the flowchart 500 may start at 502 and may be performed by any suitable system, apparatus, or device, such as by the system 102 of FIG. 2.

At 502, the first input 402A may be received. The first input 402A may be associated with a set of orders to be produced at a production facility. In one or more embodiments, the processor 202 may be configured to receive the first input 402A associated with the set of orders to be produced at the production facility. The first input 402A may include one or more of attributes associated with each of the set of orders, an order quantity, and a fulfilment schedule for the set of orders.

At 504, the second input 402B may be received. The second input 402B may be associated with a set of production lines of the production facility to be used for a production of the set of orders. In one or more embodiments, the processor 202 may be configured to receive the second input 402B associated with the set of production lines of the production facility to be used for the production of the set of orders. The second input 402B may include first information associated with a set of production slots in each of the set of production lines, and second information associated with a day-wise availability of each of the set of production lines.

At 506, a set of production-related datapoints may be extracted. The set of production-related datapoints may be extracted based on the received first input 402A and the received second input 402B. Each of extracted set of production-related datapoints may be required for a production planning of the set of orders. In one or more embodiments, the processor 202 may be configured to extract, based on the received first input 402A and the received second input 402B, the set of production-related datapoints, each of which may be required for the production planning of the set of orders. Details about the extraction of the set of production-related datapoints are provided in FIG. 4, for example.

At 508, the third input 402C may be received. The third input 402C may be associated with a set of constraints associated with the production planning. In one or more embodiments, the processor 202 may be configured to receive the third input 402C associated with the set of constraints. The set of constraints may include one or more of a first constraint which determines a first maximum number of orders producible in a day without incurring a first penalty, a second constraint which determines a second maximum number of orders producible within a production bucket without incurring a second penalty, a third constraint which determines an earliest start date of the production without incurring a third penalty, a fourth constraint which determines a latest end date of the production without incurring a fourth penalty, a fifth constraint which determines a maximum of a first number of orders producible in a first number of sequential production slots without incurring a fifth penalty, and a sixth constraint which determines a minimum number of unoccupied production slots between a pair of occupied production slots without incurring a sixth penalty.

At 510, a Quadratic Unconstrained Binary Optimization (QUBO) formulation may be generated. The QUBO formulation may be generated based on the extracted set of production-related datapoints and the received third input 402C. In one or more embodiments, the processor 202 may be configured to generate the QUBO formulation based on the extracted set of production-related datapoints and the received third input 402C. Details about the QUBO formulation are provided in FIG. 4.

At 512, the generated QUBO formulation may be submitted to the first optimization solver machine 108 via an application programming interface (API) call. In one or more embodiments, the processor 202 may be configured to submit the generated pQUBO formulation to the first optimization solver machine 108. Details about the submission of the generated QUBO formulation are provided in FIG. 4.

At 514, a first solution of the submitted QUBO formulation may be received. The first solution of the submitted QUBO formulation may be received from the first optimization solver machine 108. The received first solution may include binary values for the vector of binary decision variables associated with the QUBO formulation. In one or more embodiments, the processor 202 may be configured to receive the first solution of the submitted QUBO formulation from the first optimization solver machine 108.

At 516, a schedule to be used for the production of the set of orders on the set of production lines may be determined. The schedule may be determined based on the received first solution. In one or more embodiments, the processor 202 may be configured to determine the schedule based on the received first solution.

At 518, the generated QUBO formulation may be transformed into an Ising formulation. The Ising formulation may be a compatible input format for a set of Ising processing units of the second optimization solver machine 214 which may be same as or different from the first optimization solver machine 108. In the Ising formulation, attributes and relationship among the attributes are based on an Ising model. The Ising model is a mathematical model of ferromagnetism in reference to statistical mechanics. The model uses discrete variables which represent the magnetic dipole moments of spin states, (which are either +1 or -1). The datapoints (which are represented as the spin states) may be organized as a lattice so each spin may interact with its neighbors.

The solution of the Ising formulation may be differ from that of the QUBO formulation with respect to selection of values for the vector of binary decision variables. For the QUBO formulation, the binary value for a decision variable may be represented as one of 0 or 1. Whereas, for the Ising formulation, the binary value for a decision variable may be represented as one of -1 or +1 (which may be analogous to two spin states of an Ising system).

At 520, the Ising formulation may be submitted to the second optimization solver machine 214. The second optimization solver machine 214 may include the set of Ising processing units that may be configured to solve the Ising formulation(s). In one or more embodiments, each Ising processing unit may be a software module or hardware-based device (such as a digital annealer) that may be configured to solve the Ising formulation(s). Each Ising processing unit may correspond to a mathematical abstraction of an Ising model for solving the Ising formulation. The Ising model may be expressed in terms of the individual spin states (+1/-1), the interaction coefficients that represent the strength of the intersections between different pairs of spin states, and the external magnetic coefficients that represent the strength of the external magnetic field. Therefore, a solution of the Ising formulation may be analogous to spin states for a minimum energy configuration of the Ising model. The set of Ising Processing Units may be configured to solve the Ising formulation by searching for values of binary decision variables (+1/-1) of the Ising formulation from a discrete solution space such that the energy (analogous to energy of the Ising Model) of the Ising formulation is a minimum.

The Ising formulation may be provided as an input to the second optimization solver machine 214 to generate a second solution by solving the Ising formulation. In one or more embodiments, the processor 202 may be configured to submit the Ising formulation to the second optimization solver machine 214. By way of example and not limitation, the Ising formulation may be submitted to the second optimization solver machine 214 via an API call.

At 522, a second solution of the submitted Ising formulation may be received from the second optimization solver machine 214. The received second solution may include binary values for the vector of binary decision variables of the Ising formulation. In one or more embodiments, the processor 202 may be configured to receive the second solution of the Ising formulation from the second optimization solver machine 214.

At 524, the schedule may be determined based on the received second solution. The determined schedule may be used for the production of the set of orders on the set of production lines. In one or more embodiments, the processor 202 may be configured to determine the schedule based on the received second solution.

Control may pass to end. Although the flowchart 500 is illustrated as discrete operations, such as 502, 504, 506, 508, 510, 512, 514, 516, 518, 520, 522, and 524; however, in certain embodiments, such discrete operations may be further divided into additional operations, combined into fewer operations, or eliminated, depending on the particular implementation.

Various embodiments of the disclosure may provide a non-transitory computer-readable storage medium configured to store instructions that, in response to being executed, causes a system (such as the system 102) to perform operations that include receiving a first input (such as the first input 402A) associated with a set of orders to be produced at a production facility. The operations may further include receiving a second input (such as the second input 402B) associated with a set of production lines of the production facility to be used for a production of the set of orders. The operations may further include extracting a set of production-related datapoints based on the received first input and the received second input Each of extracted set of production-related datapoints may be required for a production planning of the set of orders. The operations may further include receiving a third input (such as the third input 402C) associated with a set of constraints associated with the production planning. The operations may further include generating a Quadratic Unconstrained Binary Optimization (QUBO) formulation based on the extracted set of production-related datapoints and the received third input The operations may further include submitting the generated QUBO formulation to a first optimization solver machine (such as the first optimization solver machine 108). The operations may further include receiving a first solution of the submitted QUBO formulation from the first optimization solver machine and determining a schedule to be used for the production of the set of orders on the set of production lines based on the received first solution.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

**Claims**

1. A method, comprising:

    receiving a first input associated with a set of orders to be produced at a production facility;
    receiving a second input associated with a set of production lines of the production facility to be used for a production of the set of orders;
    extracting, based on the received first input and the received second input, a set of production-related datapoints, each of which is required for a production planning of the set of orders;
    receiving a third input associated with a set of constraints associated with the production planning;
    generating a Quadratic Unconstrained Binary Optimization (QUBO) formulation based on the extracted set of production-related datapoints and the received third input;
    submitting the generated QUBO formulation to a first optimization solver machine;
    receiving a first solution of the submitted QUBO formulation from the first optimization solver machine; and
    determining, based on the received first solution, a schedule to be used for the production of the set of orders on the set of production lines.

2. The method according to claim 1, wherein the set of constraints comprises at least one of:

    a first constraint which determines a first maximum number of orders producible in a day without incurring a first penalty,
    a second constraint which determines a second maximum number of orders producible within a production bucket without incurring a second penalty,
    a third constraint which determines an earliest start date of the production without incurring a third penalty,
    a fourth constraint which determines a latest end date of the production without incurring a fourth penalty,
    a fifth constraint which determines a maximum of a first number of orders producible in a first number of sequential production slots without incurring a fifth penalty, and
    a sixth constraint which determines a minimum number of unoccupied production slots between a pair of occupied production slots without incurring a sixth penalty.

3. The method according to claim 1, wherein the first input comprises one or more of: attributes associated with each of the set of orders, an order quantity, and a fulfilment schedule for the set of orders.

4. The method according to claim 1, wherein the second input comprises one or more of:

    first information associated with a set of production slots in each of the set of production lines, and
    second information associated with a day-wise availability of each of the set of production lines.

5. The method according to claim 1, further comprising:

    calculating, based on the received first input and the received second input, a first set of parameters required for the production planning; and
    generating the QUBO formulation further based on the calculated first set of parameters.

6. The method according to claim 5, wherein the calculated first set of parameters comprises:

a first parameter representing a production interval for each production bucket of a set of production buckets required for the production of the set of orders, and

a second parameter representing a warning level associated with the production interval.

7. The method according to claim 5, further comprising:

formulating, based on the extracted set of production-related datapoints and the calculated first set of parameters, an objective function which models a problem of the production planning as a constraint optimization problem, the formulated objective function minimizes a total warning level associated with a violation of at least one of the set of constraints; and

generating the QUBO formulation further based on the formulated objective function.

8. The method according to claim 1, further comprising encoding each of the set of constraints into the generated QUBO formulation based on the received third input.

9. The method according to claim 8, wherein the encoding comprising:

identifying one or more logical constraints in the set of constraints based on the received third input; and

transforming each of the identified one or more logical constraints into a QUBO format, wherein the QUBO formulation is generated further based on the transformation.

10. The method according to claim 1, further comprising computing a total warning level based on the determined schedule,

wherein the computed total warning level indicates a total penalty incurred as a result of violation of at least one of the set of constraints in the determined schedule.

11. The method according to claim 10, further comprising displaying the determined schedule and the computed total warning level on a user device.

12. The method according to claim 1, further comprising:

transforming the generated QUBO formulation into an Ising formulation; and

submitting the Ising formulation to a second optimization solver machine.

13. The method according to claim 12, further comprising:

receiving, from the second optimization solver machine, a second solution of the submitted Ising formulation; and

determining the schedule based on the received second solution.

14. A non-transitory computer-readable storage medium configured to store instructions that, in response to being executed, causes a system to perform operations, the operations comprising:

receiving a first input associated with a set of orders to be produced at a production facility;

receiving a second input associated with a set of production lines of the production facility to be used for a production of the set of orders;

extracting, based on the received first input and the received second input, a set of production-related datapoints, each of which is required for a production planning of the set of orders;

receiving a third input associated with a set of constraints associated with the production planning;

generating a Quadratic Unconstrained Binary Optimization (QUBO) formulation based on the extracted set of production-related datapoints and the received third input;

submitting the generated QUBO formulation to a first optimization solver machine;

receiving a first solution of the submitted QUBO formulation from the first optimization solver machine; and

determining, based on the received first solution, a schedule to be used for the production of the set of orders on the set of production lines.

15. The non-transitory computer-readable storage medium according to claim 14, wherein the first input comprises one or more of: attributes associated with each of the set of orders, an order quantity, and a fulfilment schedule for the set of orders.

**16.** The non-transitory computer-readable storage medium according to claim 14, wherein the operations further comprise:

calculating, based on the received first input and the received second input, a first set of parameters required for the production planning; and
generating the QUBO formulation further based on the calculated first set of parameters.

**17.** The non-transitory computer-readable storage medium according to claim 16, wherein the operations further comprise:

formulating, based on the extracted set of production-related datapoints and the calculated first set of parameters, an objective function which models a problem of the production planning as a constraint optimization problem, the formulated objective function minimizes a total warning level associated with a violation of at least one of the set of constraints; and
generating the QUBO formulation further based on the formulated objective function.

**18.** The non-transitory computer-readable storage medium according to claim 14, wherein the set of constraints comprises at least one of:

a first constraint which determines a first maximum number of orders producible in a day without incurring a first penalty,
a second constraint which determines a second maximum number of orders producible within a production bucket without incurring a second penalty,
a third constraint which determines an earliest start date of the production without incurring a third penalty,
a fourth constraint which determines a latest end date of the production without incurring a fourth penalty,
a fifth constraint which determines a maximum of a first number of orders producible in a first number of sequential production slots without incurring a fifth penalty, and
a sixth constraint which determines a minimum number of unoccupied production slots between a pair of occupied production slots without incurring a sixth penalty.

**19.** The non-transitory computer-readable storage medium according to claim 14, wherein the operations further comprise:

first information associated with a set of production slots in each of the set of production lines, and
second information associated with a day-wise availability of each of the set of production lines.

**20.** A system, comprising:
a processor configured to:

receive a first input associated with a set of orders to be produced at a production facility;
receive a second input associated with a set of production lines of the production facility to be used for a production of the set of orders;
extract, based on the received first input and the received second input, a set of production-related datapoints, each of which is required for a production planning of the set of orders;
receive a third input associated with a set of constraints associated with the production planning;
generate a Quadratic Unconstrained Binary Optimization (QUBO) formulation based on the extracted set of production-related datapoints and the received third input;
submit the generated QUBO formulation to a first optimization solver machine;
receive a first solution of the submitted QUBO formulation from the first optimization solver machine; and
determine, based on the received first solution, a schedule to be used for the production of the set of orders on the set of production lines.

**User Device 104**

**Electronic User Interface 106**

| Enter Set of Orders | Enter Set of Production Lines | Enter Set of Constraints |
|---|---|---|
| Order A<br>Order B<br>... | Production Line A<br>Production Line B<br>... | MaxInDay<br>MaxInBucket<br>...<br>Skip |

Submit

112

Communication Network 110

System 102

First Optimization Solver Machine 108

100

*FIG. 1*

200

Second Optimization Solver Machine 214

First Optimization Solver Machine 108

Communication Network 110

System 102

Network Interface 212

Processor 202

Memory 204

I/O Device 208

Persistent Data Storage 206

Display Device 210

User Device 104

FIG. 2

FIG. 3

FIG. 4

500

502
Receive first input associated with set of orders to be produced at production facility

504
Receive second input associated with set of production lines of production facility to be used for production of set of orders

506
Extract, based on received first input and received second input, set of production-related datapoints, each of which is required for production planning of set of orders

508
Receive third input associated with set of constraints associated with production planning

510
Generate Quadratic Unconstrained Binary Optimization (QUBO) formulation based on extracted set of production-related datapoints and received third input

512
Submit generated QUBO formulation to first optimization solver machine

518
Transform QUBO formulation into Ising formulation

514
Receive first solution of submitted QUBO formulation from first optimization solver machine

520
Submit Ising formulation to second optimization solver machine

516
Determine, based on received first solution, schedule to be used for production of set of orders on set of production lines

522
Receive second solution of submitted Ising formulation from second optimization solver machine

524
Determine schedule to be used for production of set of orders on set of production lines

*FIG. 5*

Europäisches
Patentamt

European
Patent Office

Office européen
des brevets

# EUROPEAN SEARCH REPORT

Application Number

EP 21 19 0104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2020 140615 A (JFE STEEL CORP) 3 September 2020 (2020-09-03) * abstract * * paragraph [0001] – paragraph [0008] * ----- | 1-20 | INV. G06Q10/04 G06Q50/04 |
| X | EP 3 685 968 A1 (BAYERISCHE MOTOREN WERKE AG [DE]) 29 July 2020 (2020-07-29) * abstract * * paragraphs [0005], [0020] * ----- | 1-20 | |

TECHNICAL FIELDS
SEARCHED       (IPC)

G06Q

The present search report has been drawn up for all claims

| Place of search | Date of completion of the search | Examiner |
|---|---|---|
| Munich | 1 February 2022 | Haitof, Houssam |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
............................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 19 0104

This annex lists the patent family members relating to the patent documents cited in the above-mentioned European search report.
The members are as contained in the European Patent Office EDP file on
The European Patent Office is in no way liable for these particulars which are merely given for the purpose of information.

01-02-2022

| Patent document cited in search report | | Publication date | Patent family member(s) | Publication date |
|---|---|---|---|---|
| JP 2020140615 | A | 03-09-2020 | NONE | |
| EP 3685968 | A1 | 29-07-2020 | NONE | |

EPO FORM P0459

For more details about this annex : see Official Journal of the European Patent Office, No. 12/82